# EUROPEAN PATENT SPECIFICATION

(11) **EP 2 327 515 B1**
(45) Date of publication and mention of the grant of the patent: **03.07.2013**
(21) Application number: 10192038.7
(22) Date of filing: 22.11.2010
(51) Int. Cl.: B25B 23/04, B23P 19/00

(54) **Head type male screw sending and separating feeding apparatus**
Zuführvorrichtung zum Senden und Trennen von Kopfschrauben
Appareil d'envoi, de séparation et d'alimentation de vis mâle de type tête

(30) Priority: 27.11.2009 JP 2009269811
(43) Date of publication of application: 01.06.2011
(73) Proprietor: Pias Sales Co., Ltd., Osaka (JP)
(72) Inventor: Shinjo, Hiroshi, Osaka (JP)
(74) Representative: Price, Paul Anthony King

(56) References cited:
- EP-A1- 0 703 037
- JP-A- 2004 034 231

## Description

### [Field of the Invention]

The present invention relates to a head type male screw sending and separating feeding apparatus which separately feeds head type male screws such as screws and bolts one by one to an automatic assembling machine, press, or other machines used.

### [Background Art]

Automatic feeding devices for head type male screws such as screws and bolts are available in various types. Generally, such a device comprises an arranging device having a chute for delivering head type male screws in a hopper, arranging them in a line, a separating device for separating the male screws one by one which are delivered from the chute, and a feed hose for feeding the male screws separated by the separating device up to a machine used such as an automatic assembling machine by using air pressures, wherein the arranging device and separating device are integrated (e.g. see JP-3045271-B2).

Such an automatic feeding device repeats separating and feeding the head type male screws according to the auto signals from the machine used or the operator's request, but when the distance from the arranging device to the machine used is very long because of the installation place, a long feed hose and much time are required for the separating and feeding operation, resulting in generation of a standby mode, and there arise such a problem that it is unable to cope with the production speed of the machine used. Also, in case separated male screws are fed in a long feed hose with use of air pressures, the air consumption is increased and there is a fear of pressure drop of other air pressure equipment installed in the factory.

On the other hand, in an automatic feeding device for nuts, there exists a device which feeds a plurality of nuts together to a machine used by using air pressures or the like and separates them one by one at the machine side, but in the case of male screws, the head and screw shaft are different in diameter, and in addition, the screw shafts are different in length, and it is usually difficult to feed a plurality of head type male screws together and to separate them one by one at the machine used.

### [Summary of the Invention]

There is a need for a head type male screw sending and separating feeding apparatus which feeds a plurality of head type male screws together close to a machine used and separates them one by one in the vicinity of the machine used, so that, even in case the distance between the arranging device and the machine used is very long, there will be no loss of feeding time, and the feeding speed is greatly increased. Also, the air consumption can be reduced by feeding a plurality of male screws together, which may therefore contribute to energy saving.

The present invention is configured as follows.

The present invention comprises a head type male screw sending and separating feeding apparatus, comprising:
an arranging device for delivering head type male screws such as screws and bolts, arranging them in a line;
a sending device for sending the male screws delivered from the arranging device to a first feed hose with screw shaft positioned at front and head positioned at rear, arranging them in an axial direction; and
a separating feeding device connected to a front end of the first feed hose and installable near a machine used for separating one by one a plurality of the male screws delivered together through the first feed hose and feeding them to an assembling section of the machine used through a second feed hose,
wherein the sending device is provided with a separating mechanism for separating one by one the male screws delivered from the arranging device and sequentially feeding them to the first feed hose with the screw shaft positioned at front and the head positioned at rear, and a pressure air supply port for sending the male screws delivered into the first feed hose each by a plurality of pieces together to the separating feeding device;
the separating feeding device is provided with a separating passage having a bore diameter a little larger than the outer diameter of the male screw head, a pair of shutter members disposed at spaced interval greater than the height of the male screw head in the feeding direction of the separating passage and set up in such manner as to allow free entry in a lateral direction to the separating passage and alternately repeats forward and backward movements with respect to the separating passage, and a pressure air supply port for feeding one by one the male screws separated in the separating passage to an assembling section of the machine used through the second feed hose, and an inlet port of the separating passage is connected to the first feed hose, while an outlet port is connected to the second feed hose, and the pair of shutter members are provided with a guide stop portion having an arcuate concave for receiving the screw shaft of the male screw at the end portion thereof, and the guide stop portion blocks the passage of the male screw head in its forward movement, but it is so configured as to guide and allow passage of screw shafts, and therefore the pair of shutter members alternately move forward and backward with respect to the separating passage, thereby separating one by one the male screws delivered into the separating passage.

In a preferred embodiment, the pair of shutter members are set up in a main body in the separating passage in such manner as to allow free entry in a lateral direction to the separating passage and are activated in the forward direction by means of springs, and a rocking lever for operating the pair of shutter members is journaled on the main body with a support shaft fixed at the center thereof positioned in the middle of the pair of shutter members, and pins protruding at respective ends of the rocking lever loosely engage in elongate holes formed in side surfaces of the pair of shutter members, and the rocking lever is rocked on the support shaft by means of a driving device interlocked with the support shaft, and thereby the pair of shutter members alternately moves forward and backward with respect to the separating passage, and also, when the rocking lever is in neutral position, the pair of shutter members activated by the springs simultaneously moves forward with respect to the separating passage.

In a preferred embodiment, the pins protrude at sides of the pair of shutter members, and the elongate holes engaging the pins are disposed at respective ends of the rocking lever.

### [Advantages of the Invention]

According to the present invention, head type male screws delivered from an arranging device are arranged in the axial direction with the screw shaft positioned at front and the head positioned at rear and are delivered into a first feed hose. The male screws are fed together each by a plurality of pieces through the first feed hose to a separating feeding device installed in the vicinity of a machine used by means of pressure air, and the male screws separated one by one by the separating feeding device are fed with the pressure air only for a short distance through a second feed hose to feed them to the machine used. Accordingly, the feeding speed can be remarkably enhanced. Also, because a plurality of male screws are fed together through the long first feed hose, the air consumption can be greatly reduced as compared with the case of separately feeding one by one for a long distance with air pressure.

In a preferred embodiment, when the rocking lever of the separating feeding device is in the neutral position, the pair of shutter members serve to guide and allow passage of one male screw with both guide stop portions of the pair of shutter members in a position of simultaneous entering into the separating passage. Therefore, there is no fear of accidental separating/feeding of a plurality of male screws, and it is possible to reliably separate the male screws one by one and feed them to the machine used.

The delivering capacity of the arranging device can be obtained in a state of storing a plurality of male screws in the first feed hose without waiting for a request from the machine used. Therefore, by adding a device for separating the delivering port of the arranging device into two or four rows for example, it is possible to cope with a plurality of machines used by using only one arranging device.

### [Brief Description of the Drawings]

Fig. 1 is a schematic explanatory diagram of the whole showing an embodiment of a sending and separating feeding apparatus of the present invention applied to an automatic clinch bolt assembling press.
Fig. 2 is an enlarged front view of an arranging device and sending device.
Fig. 3 is an enlarged view of main portions of the arranging device and sending device.
Fig. 4 is a side view of Fig. 3.
Fig. 5 is a partly longitudinal enlarged front view of a separating feeding device.
Fig. 6 is a partly longitudinal enlarged front view showing an operating status of the separating feeding device.
Fig. 7 is a partly longitudinal enlarged front view showing an operating status of a separating feeding device same as in Fig. 6.
Fig. 8 is an enlarged sectional view of an essential portion of the separating feeding device.
Fig. 9 is a perspective view showing a pair of shutter members which is a main component part of the separating feeding device.
Fig. 10 includes explanatory diagrams showing the process of separately feeding head type male screws (clinch bolts) one by one by operating the separating feeding device.

### [Description of the Preferred Embodiments]

The preferred embodiments of the present invention will be described in the following with reference to the drawings.

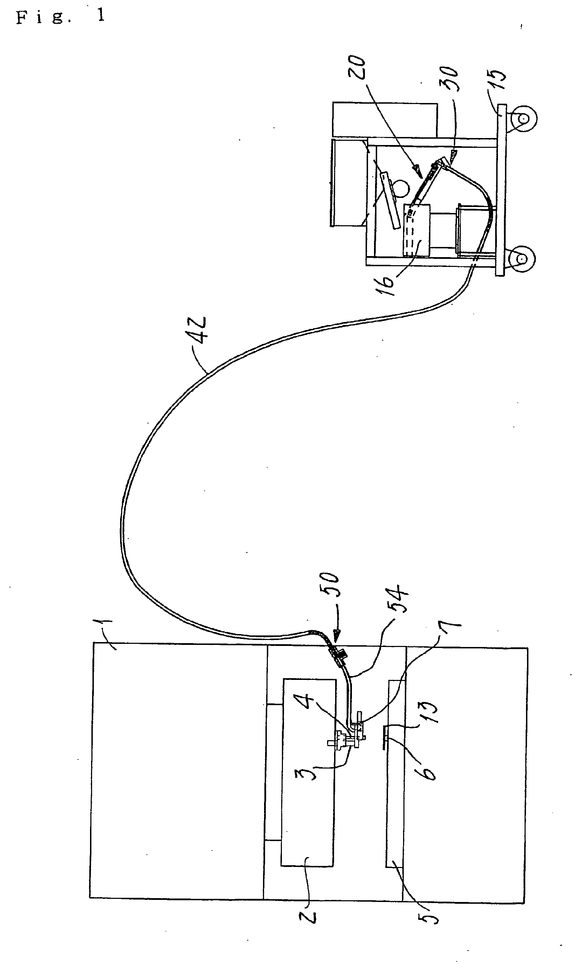

Fig. 1 shows an embodiment of the head type male screw sending and separating feeding apparatus of the present invention applied to an automatic clinch bolt assembling press.

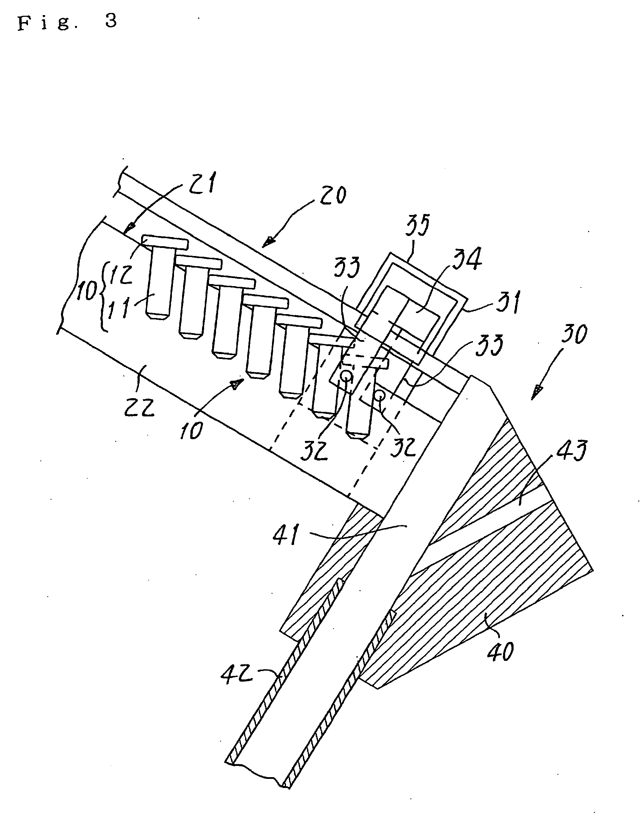

Automatic assembling press (machine used or destination machine) 1 is, as described later, a machine such that clinch bolt 10 (see Fig. 3) fed to punch block 3 fixed on upper mold 2 is caulked and secured on metal panel 13 placed on die 6 of lower mold 5 by means of driving punch 4.

Clinch bolt 10 is, as shown in Fig. 3, a head type male screw having head 12 at the upper end of screw shaft 11 the same as in an ordinary bolt, and a protrusion for caulking (not shown) is disposed on the seat surface of head 12.

Arranging device 20 and sending device 30 for clinch bolt 10 are attached to hopper feeder 16 mounted on bogie truck 15, and it can be installed in a place away from automatic assembling press (machine used) 1 by moving bogie truck 15.

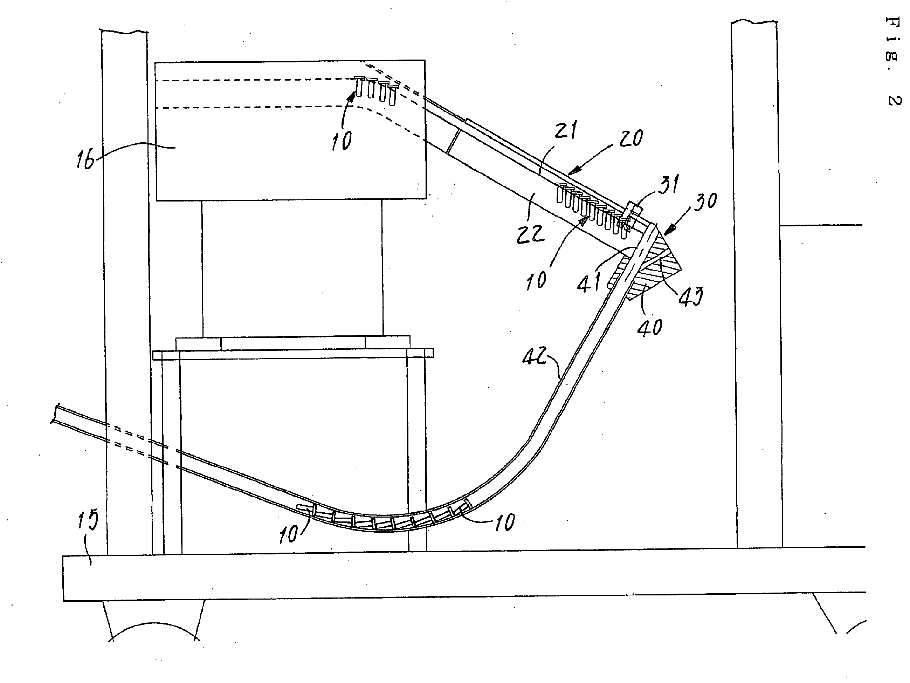

Arranging device 20 is the one commonly known, and as shown in Fig. 2 to Fig. 4, clinch bolts 10 delivered from hopper feeder 16 are sent to chute 21 formed of two rails 22, 22 obliquely disposed downward, then the bolts are arranged in a line in a state of hanging and are continuously delivered.

Sending device 30 is disposed near the front end of chute 21, comprising separating mechanism 31 for separating clinch bolts 10 one by one which are arranged in a line and delivered along chute 21, and main block 40 securely attached to the front end of chute 21.

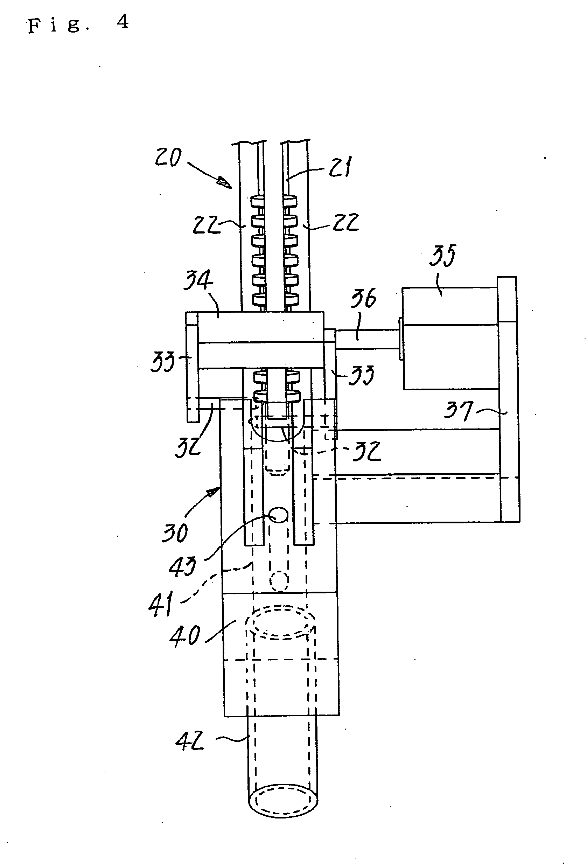

Separating mechanism 31 is, as shown in Fig. 3 and Fig. 4, provided with a pair of separating pins 32, 32 going through rails 22, 22 and alternately getting in and out of the delivery passage in a lateral direction at the front end of chute 21. Separating pins 32, 32 are securely fitted to either end of connecting member 34 respectively via support arms 33, 33. Connecting member 34 is disposed at the upper side of chute 21 and reciprocally moves in a direction perpendicular to the delivering direction of chute 21, interlocking with piston rod 36 of air cylinder 35, and thereby, both separating pins 32, 32 alternately get in and out of the delivery passage of chute 21 in a lateral direction. Air cylinder 35 is securely fitted to one rail 22 via bracket 37. Both separating pins 32, 32 alternately get in and out of the delivery passage near the front end of chute 21 repeatedly in a lateral direction. Thus, clinch bolts 10 arranged and delivered in a line are separated one by one and arranged to be sent in an axial direction to guide passage 41 disposed in main block 40 with screw shaft 11 positioned at front and head 12 positioned at rear. Main block 40 is provided with first feed hose 42 connected to guide passage 41, and pressure air supply port 43. Clinch bolts 10 delivered through guide passage 41 into first feed hose 42 with screw shaft 11 positioned at front and head 12 positioned at rear are fed each by a plurality of pieces to separating feeding device 50 described later by using pressure air supplied from supply port 43.

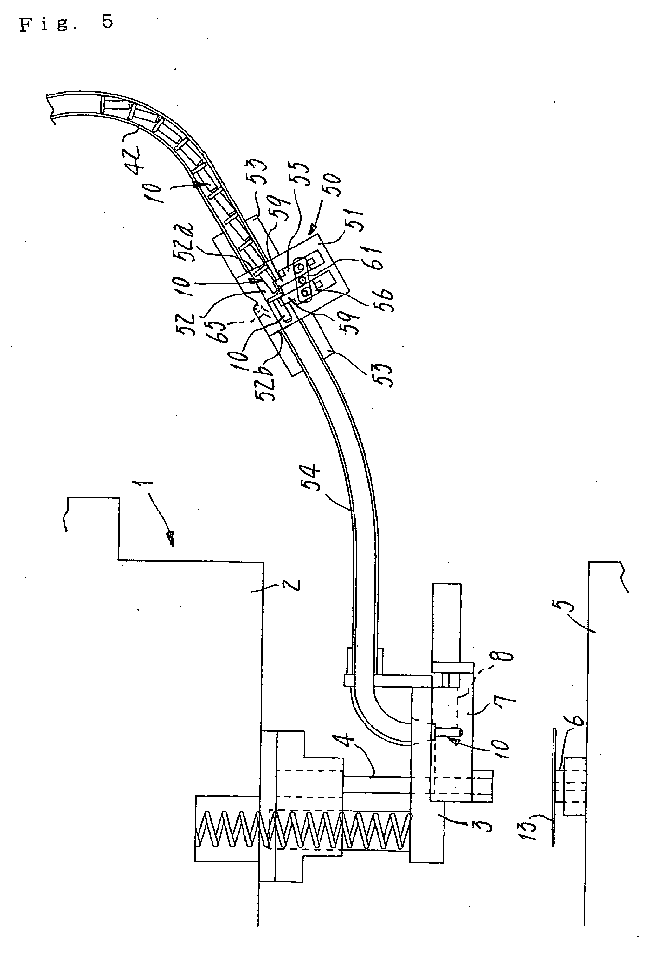

Separating feeding device 50 is installed in the vicinity of automatic assembling press (machine used) 1 as shown in Fig. 1, Fig. 5 to Fig. 7. Main block 51 that is a main part of separating feeding device 50 is provided with separating passage 52 having bore diameter larger (e.g. a little larger) than head 12 of clinch bolt 10 in such manner as to go through in a vertical direction, and the front end of first feed hose 42 is connected to inlet port 52a of separating passage 52 via connector 53, while second feed hose 54 being shorter in length is connected to outlet port 52b via connector 53. The front end of second feed hose 54 is connected to male screw receiver 7 disposed in punch block 3 of automatic assembling press (machine used) 1 (see Fig. 5).

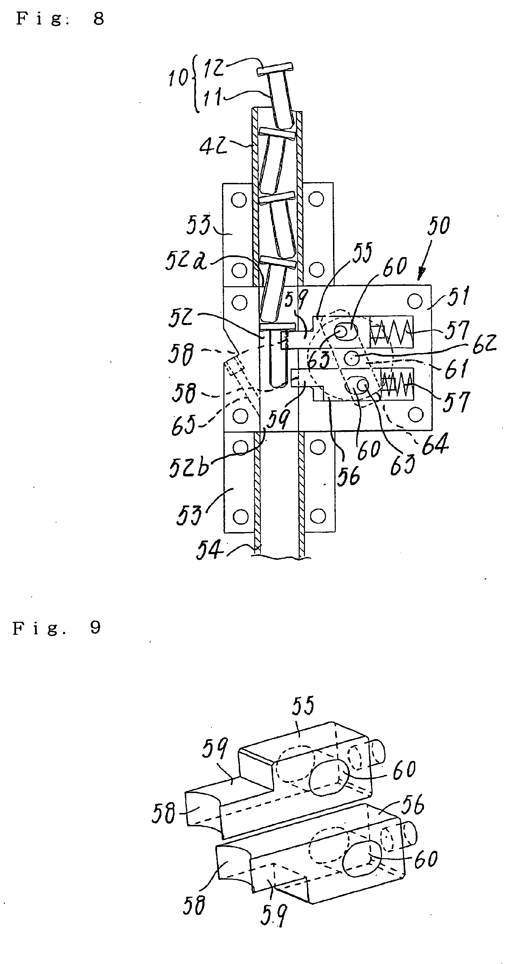

As clearly shown in Fig. 8, main block 51 of separating feeding device 50 is provided with a pair of shutter members 55, 56 which may freely enter in a lateral direction to separating passage 52. Both shutter members 55, 56 are installed in main block 51 at spaced intervals greater than the height of head 12 of clinch bolt 10 in the feeding direction of separating passage 52, and are always activated in the forward direction respectively by means of push springs 57, 57, and also moved repeatedly forward and backward alternately to separating passage 52 in a lateral direction by means of rocking lever 61 described later. Both shutter members 55, 56 are same in shape and, as shown in Fig. 9, provided with a guide stop portion 59 having arcuate concave 58 along the outer periphery of screw shaft 11 of clinch bolt 10 at the end portion thereof, and provided with long hole 60 going through in a lateral direction and engaging rocking lever 61 described later at the side surface thereof. Both shutter members 55, 56 are installed in main block 51 in a vertically reversed fashion, and each of guide stop portions 59, 59 enters into separating passage 52 in a lateral direction and moves forward and backward.

As to rocking lever 61 for operating both shutter members 55, 56, support shaft 62 fixed at the center thereof is positioned between both shutter members 55, 56 and journaled in main block 51, and pins 63, 63 protruding at either end side of rocking lever 61 are engaged with long holes 60, 60 of both shutter members 55, 56 in a state of floating. Support shaft 62 is interlocked with driving device 64 such as rotary motor, rotary actuator, and air cylinder which are attached to main block 51, and support shaft 62 is normally reversed at a specific angle by driving device 64 so that rocking lever 61 is rocked about support shaft 62. Also, main block 51 is provided with pressure air supply port 65 which opens toward second feed hose 54.

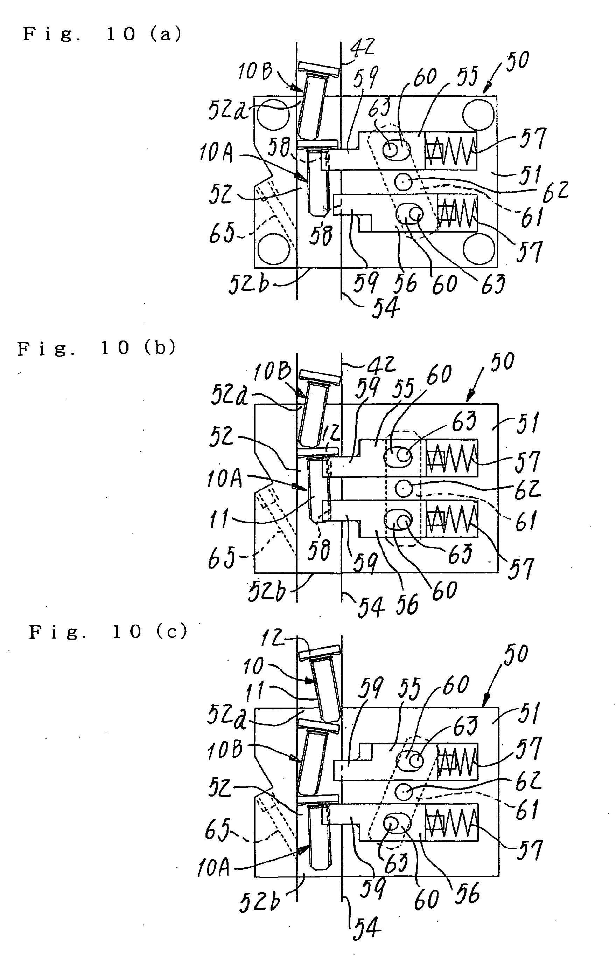

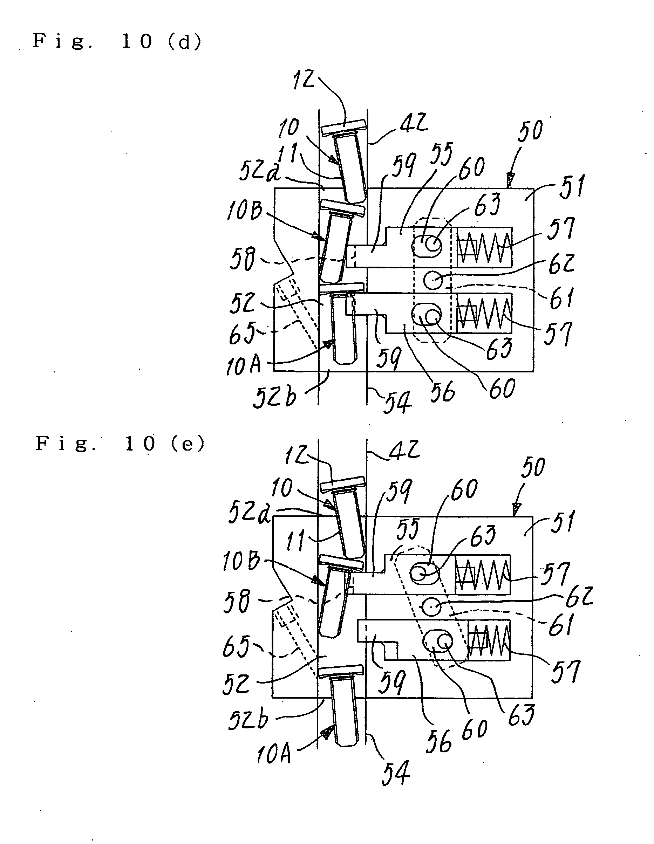

Fig. 10 shows the separate feeding of clinch bolts 10 by means of separating feeding device 50 described above.

Fig. 10 (a) shows an initial status such that a plurality of clinch bolts 10 delivered together to first feed hose 42 are delivered into separating passage 52 of separating feeding device 50, and clinch bolt 10A at the front is stopped by guide stop portion 59 of shutter member 55 at the upper side in the forward position, and thereby, its passage is prevented. In this case, rocking lever 61 is in a position of rocking at a specific angle about support shaft 62 in a counterclockwise direction, while shutter member 56 at the lower side is in a backward position against push spring 57, and its guide stop portion 59 is not interfering with clinch bolt 10A. Next, as shown in Fig. 10 (b), when rocking lever 61 rocks in a clockwise direction to be shifted to the neutral position, shutter member 56 at the lower side is activated by push spring 57 to enter into the forward position. Also, shutter member 55 at the upper side maintains the forward position due to the activating effect of push spring 57. In this condition, head 12 of clinch bolt 10A is stopped by guide stop portion 59 of shutter member 55 at the upper side, and it is guided so that arcuate concave 58 formed at the end of guide stop portion 59 of shutter member 56 at the lower side is positioned along the outer periphery of screw shaft 11 of clinch bolt 10A. Subsequently, as shown in Fig. 10 (c), when rocking lever 61 is rocked at a specific angle in a clockwise direction, shutter member 55 at the upper side is shifted back to the backward position against push spring 57, while shutter member 56 at the lower side is maintained in the forward position due to the activating effect of push spring 57. In this condition, the state of being stopped by guide stop portion 59 of shutter member 55 at the upper side is released with respect to head 12 of clinch bolt 10A, and clinch bolt 10A moves dropping in separating passage 52, while screw shaft 11 of clinch bolt 10A is guided by arcuate concave 58 at the tip end of guide stop portion 59 of shutter member 56 at the lower side. Therefore, head 12 of clinch bolt 10A is reliably stopped by guide stop portion 59 of shutter member 56 at the lower side. Accordingly, clinch bolt 10A is prevented from passing by means of shutter member 56 at the lower side, and there is no fear of accidental dropping. In this condition, as shown in Fig. 10(d), when rocking lever 61 moves in a counterclockwise and returns to the neutral position, shutter member 55 at the upper side is activated by push spring 57 to enter into the forward position. Also, shutter member 56 at the lower side maintains the forward position due to the activating effect of push spring 57. Accordingly, the first clinch bolt 10A maintains the state of head 12 being stopped by guide stop portion 59 of shutter member 56 at the lower side, while the second clinch bolt 10B moves dropping with its screw shaft 11 not interfering with guide stop portion 59 of shutter member 55 at the upper side. Then the tip end of screw shaft 11 abuts head 12 of first clinch bolt A and stops. Further, as shown in Fig. 10 (e), when rocking lever 61 rocks at a specific angle in a counterclockwise and returns to the initial status, shutter member 56 at the lower side is shifted back to the backward position against push spring 57, and the state of being stopped by guide stop portion 59 is released with respect to had 12 of clinch bolt 10A, and clinch bolt 10A moves dropping in separating passage 52 and is delivered to second feed hose 54. On the other hand, shutter member 55 at the upper side is maintained in the forward position, and head 12 of second clinch bolt 10B is stopped by guide stop portion 59, and there is no fear of accidental dropping of clinch bolt 10B and delivering thereof to second feed hose 54.

Similar operations as mentioned above are repeated to separate a plurality of clinch bolts 10 delivered into separating passage 52 one by one to feed them into second feed hose 54. Clinch bolts 10 fed into second feed hose 54 are, as shown in Fig. 5, fed into male screw receiver 7 of automatic assembling press (machine used) 1 by using pressure air supplied from supply port 65.

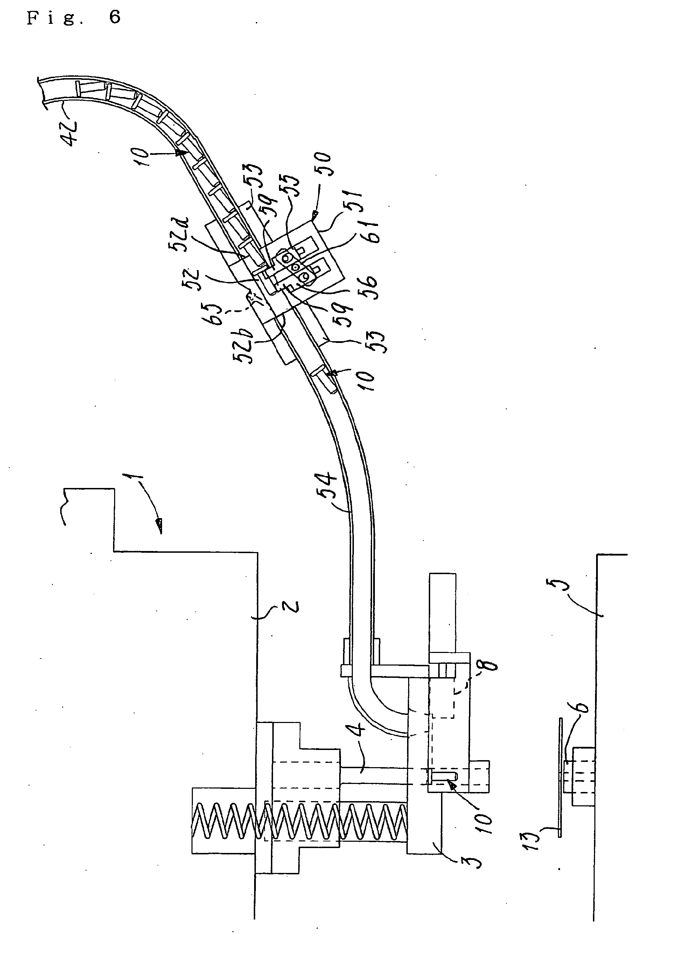

When clinch bolt 10 fed into male screw receiver 7 of automatic assembling press (machine used) 1 is transferred to the punching position just under driving punch 4 by means of pusher 8, next clinch bolt 10 is fed into second feed hose 54 by using pressure air (see Fig. 6). On the other hand, metal panel 13 placed on die 6 is provided with mounting hole (not shown) through which screw shaft 11 of clinch bolt 10 is set.

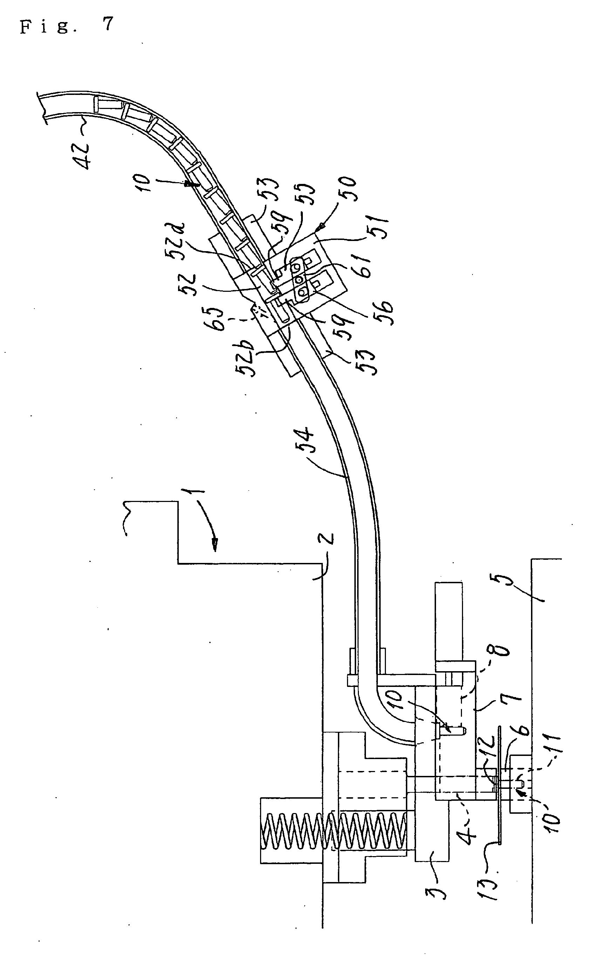

In this condition, when upper mold 2 moves down, as shown in Fig. 7, metal panel 13 is pressed and supported by punch block 3. Also, screw shaft 11 of clinch bolt 10 pressed by driving punch 4 is set through the mounting hole of metal panel 13. Subsequently, head 12 is pressed by metal panel 13, causing clinch bolt 10 to be caulked and fixed on metal panel 13. In this case, next clinch bolt 10 fed through second feed hose 54 is supplied into male screw receiver 7. Similar operations as mentioned above are repeated to fix clinch bolt 10 on metal panel 13.

In the separating feeding device of the embodiment described, it is allowable to provide the pair of upper and lower shutter members 55, 56 with pins 63, 63 and to provide rocking lever 61 with long holes 60, 60.

### [Description of the Reference Numerals and Signs]

- 1: Automatic assembling press (machine used)
- 2: Upper mold
- 3: Punch block
- 4: Driving punch
- 5: Lower mold
- 6: Die
- 7: Male screw receiver
- 8: Pusher
- 10: Clinch bolt
- 11: Screw shaft
- 12: Head
- 13: Metal panel
- 20: Arranging device
- 21: Chute
- 22: Rail
- 30: Sending device
- 31: Separating mechanism
- 32: Separating pin
- 40: Main block
- 41: Guide passage
- 42: First feed hose
- 43: Pressure air supply port
- 50: Separating feeding device
- 51: Main block
- 52: Separating passage
- 54: Second feed hose
- 55, 56: Pair of shutter members
- 57: Push spring
- 58: Arcuate concave
- 59: Guide stop portion
- 60: Long hole
- 61: Rocking lever
- 62: Support shaft
- 63: Pin
- 64: Driving device
- 65: Pressure air supply port

## Claims

1. A head type male screw sending and separating feeding apparatus, comprising:
an arranging device (20) for delivering head type male screws (10) such as screws and bolts, arranging them in a line;
a sending device (30) for sending the male screws (10) delivered from the arranging device (20) to a first feed hose (42) with screw shaft (11) positioned at front and head (12) positioned at rear, arranging them in an axial direction;
wherein the sending device (30) is provided with a separating mechanism (31) for separating one by one the male screws delivered from the arranging device and sequentially feeding them to the first feed hose with the screw shaft positioned at front and the head positioned at rear, and a pressure air supply port (43) for sending the male screws delivered into the first feed hose each by a plurality of pieces together to the separating feeding device (50); **characterized by**
a separating feeding device (50) connected to a front end of the first feed hose (42) and installable near a machine used (1) for separating one by one a plurality of the male screws (10) delivered together through the first feed hose (42) and feeding them to an assembling section of the machine used (1) through a second feed hose (54), whereby
the separating feeding device (50) is provided with a separating passage (52) having a bore diameter a little larger than the outer diameter of the male screw head, a pair of shutter members (55, 56) disposed at spaced interval greater than the height of the male screw head in the feeding direction of the separating passage and set up in such manner as to allow free entry in a lateral direction to the separating passage and alternately repeats forward and backward movements with respect to the separating passage (52), and a pressure air supply port (65) for feeding one by one the male screws separated in the separating passage (52) to an assembling section of the machine used through the second feed hose (54), and an inlet port (52a) of the separating passage (52) is connected to the first feed hose (42), while an outlet port (52b) is connected to the second feed hose (54), and the pair of shutter members (55, 56) are provided with a guide stop portion (59) having an arcuate concave (58) for receiving the screw shaft (11) of the male screw (10) at the end portion thereof, and the guide stop portion blocks the passage of the male screw head (12) in its forward movement, but it is so configured as to guide and allow passage of screw shafts (11), and therefore the pair of shutter members alternately move forward and backward with respect to the separating passage, thereby separating one by one the male screws (10) delivered into the separating passage (52).

2. The head type male screw sending and separating feeding apparatus of claim 1, wherein the pair of shutter members (55, 56) are set up in a main body (51) in the separating passage (52) in such manner as to allow free entry in a lateral direction to the separating passage (52) and are activated in the forward direction by means of springs (57, 57), and a rocking lever (61) for operating the pair of shutter members (55, 56) is journaled on the main body with a support shaft (62) fixed at the center thereof positioned in the middle of the pair of shutter members, and pins (63, 63) protruding at respective ends of the rocking lever (61) loosely engage in elongate holes (60, 60) formed in side surfaces of the pair of shutter members (55, 56), and the rocking lever (61) is rocked on the support shaft (62) by means of a driving device (64) interlocked with the support shaft (62), and thereby the pair of shutter members (55, 56) alternately moves forward and backward with respect to the separating passage (52), and also, when the rocking lever (61) is in neutral position, the pair of shutter members (55, 56) activated by the springs (57, 57) simultaneously moves forward with respect to the separating passage (52).

3. The head type male screw sending and separating feeding apparatus of claim 2, wherein the pins (63, 63) protrude at sides of the pair of shutter members (55, 56), and the elongate holes (60, 60) engaging the pins (63, 63) are disposed at respective ends of the rocking lever (61).

## Patentansprüche

1. Zuführvorrichtung zum Senden und Trennen von Kopfschrauben, umfassend:
eine Anordnungsvorrichtung (20) zum Abgeben von Kopfschrauben (10) wie Schrauben und Bolzen, die diese in einer Linie anordnet;
eine Sendevorrichtung (30) zum Senden der Kopfschrauben (10), die von der Anordnungsvorrichtung (20) an einen ersten Zuführschlauch (42) mit einem Schraubenschaft (11) abgegeben werden, der an der Vorderseite angeordnet ist, und einem Kopf (12), der an der Rückseite angeordnet ist, wodurch diese in axialer Richtung angeordnet sind; wobei die Sendevorrichtung (30) mit einem Trennmechanismus (31) zum einzelnen Trennen der Kopfschrauben, die von der Anordnungsvorrichtung abgegeben werden, und zum sequentiellen Zuführen davon zu dem ersten Zuführschlauch versehen ist, wobei der Schraubenschaft an der Vorderseite angeordnet ist und der Kopf an der Rückseite angeordnet ist, und einen Druckluftversorgungsanschluss (43) zum Senden der Kopfschrauben, die von jedem von mehreren Teilen zusammen in den ersten Zuführschlauch abgegeben werden, an eine Trennzuführvorrichtung (50); **gekennzeichnet durch**
eine Trennzuführvorrichtung (50), die mit einem vorderen Ende des ersten Zuführschlauchs (42) verbunden ist und in der Nähe einer Maschine (1), die zum einzelnen Trennen der mehreren Kopfschrauben (10), die zusammen **durch** den ersten Zuführschlauch (42) abgegeben werden, und zum Zuführen davon zu einem Anordnungsabschnitt der Maschine (1), die **durch** einen zweiten Zuführschlauch (54) verwendet wird, verwendet wird, installiert werden kann, wobei
die Trennzuführvorrichtung (50) mit einem Trenndurchgang (52) bereitgestellt ist, der einen Bohrungsdurchmesser aufweist, der ein wenig größer als der Außendurchmesser des Kopfschraubenkopfes ist; einem Paar Verschlusselemente (55, 56), die in einem beabstandeten Abstand größer als die Höhe des Kopfschraubenkopfes in der Zuführrichtung des Trenndurchgangs angeordnet und auf solche Weise eingerichtet sind, dass sie einen freien Einlass in die seitliche Richtung zu dem Trenndurchgang zulassen und abwechselnd Vor- und Rückwärtsbewegungen in Bezug auf den Trenndurchgang (52) wiederholen; und einem Druckluftversorgungsanschluss (43) zum einzelnen Zuführen der Kopfschrauben, die in dem Trenndurchgang (52) getrennt werden, zu einem Anordnungsabschnitt der Maschine, die **durch** den zweiten Zuführschlauch (54) verwendet wird; und ein Einlassanschluss (52a) des Trenndurchgangs (52) mit dem ersten Zuführschlauch (42) verbunden ist, während ein Auslassanschluss (52b) mit dem zweiten Zuführschlauch (54) verbunden ist, und das Paar von Verschlusselementen (55, 56) mit einem Führungsanschlagabschnitt (59) bereitgestellt ist, die ein bogenförmiges konkaves Element (58) zum Aufnehmen des Schraubenschaftes (11) der Kopfschraube (10) am Endabschnitt davon aufweist; und der Führungsanschlagabschnitt den Durchgang des Kopfschraubenkopfes (12) in seiner Vorwärtsbewegung blockiert, aber zum Führen und Zulassen des Durchgangs der Schraubenschäfte (11) konfiguriert ist, wodurch das Paar von Verschlusselementen sich abwechselnd vor- und rückwärts in Bezug auf den Trenndurchgang bewegt, wodurch die Kopfschrauben (10), die in den Trenndurchgang (52) abgegeben werden, einzeln getrennt werden.

2. Zuführvorrichtung zum Senden und Trennen von Kopfschrauben nach Anspruch 1, wobei das Paar von Verschlusselementen (55, 56) in einem Hauptkörper (51) in dem Trenndurchgang (52) auf solche Weise eingerichtet ist, um den freien Eintritt in die seitliche Richtung zu dem Trenndurchgang (52) zuzulassen, und in Vorwärtsrichtung mittels Federn (57, 57) beaufschlagt ist, wobei ein Kipphebel (61) zum Betätigen des Paars von Verschlusselementen (55, 56) auf dem Hauptkörper mit einem Stützschaft (62) verzapft ist, der in dem Zentrum davon in der Mitte des Paars von Verschlusselementen befestigt ist, und Stifte (63, 63) aus den entsprechenden Enden des Kipphebels (61) herausragen und lose mit den länglichen Löchern (60, 60) in Eingriff treten, die in den Seitenoberflächen des Paars von Verschlusselementen (55, 56) ausgebildet sind, und der Kipphebel (61) auf dem Stützschaft (62) mithilfe einer Antriebsvorrichtung (64) gekippt wird, die mit dem Stützschaft (62) verriegelt ist, und wobei dadurch das Paar von Verschlusselementen (55, 56) abwechselnd vor und zurück in Bezug auf den Trenndurchgang (52) bewegt wird und auch, wenn der Kipphebel (61) sich in einer neutralen Stellung befindet, das Paar von Verschlusselementen (55, 56), das von den Federn (57, 57) beaufschlagt wird, sich gleichzeitig nach vorne in Bezug auf den Trenndurchgang (52) bewegt.

3. Zuführvorrichtung zum Senden und Trennen von Kopfschrauben nach Anspruch 2, wobei die Stifte (63, 63) an den Seiten des Paars von Verschlusselementen (55, 56) herausragen und die länglichen Löcher (60, 60), die in die Stifte (63, 63) eingreifen, an den entsprechenden Enden des Kipphebels (61) angeordnet sind.

## Revendications

1. Appareil d'envoi, de séparation et d'alimentation de vis mâles de type à tête, comprenant :
un dispositif d'agencement (20) pour distribuer des vis mâles de type à tête (10) telles que des vis et des boulons, qui les arrange en ligne ;
un dispositif d'envoi (30) pour envoyer les vis mâles (10) distribuées par le dispositif d'agencement (20) à un premier tuyau d'alimentation (42) avec une tige de vis (11) positionnée à l'avant et une tête (12) positionnée à l'arrière, qui les arrange dans une direction axiale ;
le dispositif d'envoi (30) étant pourvu d'un mécanisme de séparation (31) pour séparer une par une les vis mâles distribuées par le dispositif d'agencement et pour les acheminer séquentiellement au premier tuyau d'alimentation avec la tige de vis positionnée à l'avant et la tête positionnée à l'arrière, et un orifice d'alimentation en air sous pression (43) pour envoyer les vis mâles distribuées dans le premier tuyau d'alimentation à chaque fois sous la forme d'une pluralité de pièces ensemble jusqu'à un dispositif de séparation et d'alimentation (50) ;
**caractérisé par**
un dispositif de séparation et d'alimentation (50) connecté à une première extrémité du premier tuyau d'alimentation (42) et pouvant être installé à proximité d'une machine utilisée (1) pour séparer une par une une pluralité des vis mâles (10) distribuées ensemble à travers le premier tuyau d'alimentation (42) et pour les acheminer à une section d'assemblage de la machine utilisée (1) par le biais d'un deuxième tuyau d'alimentation (54),
le dispositif de séparation et d'alimentation (50) étant pourvu d'un passage de séparation (52) ayant un diamètre d'alésage un peu plus grand que le diamètre extérieur de la tête de vis mâle, d'une paire d'organes obturateurs (55, 56) disposés à intervalles espacés supérieurs à la hauteur de la tête de vis mâle dans la direction d'alimentation du passage de séparation et configurés de telle manière qu'ils permettent un libre accès dans une direction latérale au passage de séparation ainsi que des mouvements aller et retour se répétant en alternance par rapport au passage de séparation (52), et d'un orifice d'alimentation en air sous pression (43) pour alimenter une par une les vis mâles séparées dans le passage de séparation (52) jusqu'à une section d'assemblage de la machine utilisée par le biais du deuxième tuyau d'alimentation (54), et un orifice d'entrée (52a) du passage de séparation (52) étant connecté au premier tuyau d'alimentation (42), tandis qu'un orifice de sortie (52b) est connecté au deuxième tuyau d'alimentation (54), et la paire d'organes obturateurs (55, 56) étant pourvue d'une portion de butée de guidage (59) ayant une concavité (58) pour recevoir la tige de vis (11) de la vis mâle (10) au niveau de la portion d'extrémité de celle-ci, et la portion de butée de guidage bloquant le passage de la tête de vis mâle (12) dans son mouvement vers l'avant, mais étant configurée de manière à guider et permettre le passage de tiges de vis (11), et par conséquent la paire d'organes obturateurs se déplaçant en alternance vers l'avant et vers l'arrière par rapport au passage de séparation, pour ainsi séparer une par une les vis mâles (10) distribuées dans le passage de séparation (52).

2. Appareil d'envoi, de séparation et d'alimentation de vis mâles de type à tête selon la revendication 1, dans lequel la paire d'organes obturateurs (55, 56) est configurée dans un corps principal (51) dans le passage de séparation (52) de manière à permettre un libre accès dans une direction latérale au passage de séparation (52) et est activée dans la direction vers l'avant au moyen de ressorts (57, 57), et un levier culbuteur (61) pour actionner la paire d'organes obturateurs (55, 56) étant tourillonné sur le corps principal avec une tige de support (62) fixée au niveau de son centre, positionnée au milieu de la paire d'organes obturateurs, et des broches (63, 63) faisant saillie à des extrémités respectives du levier culbuteur (61) s'engageant de manière lâche dans des trous oblongs (60, 60) formés dans des surfaces latérales de la paire d'organes obturateurs (55, 56) et le levier culbuteur (61) étant basculé sur la tige de support (62) au moyen d'un dispositif d'entraînement (64) emboîté avec la tige de support (62), et de ce fait la paire d'organes obturateurs (55, 56) se déplaçant en alternance d'avant en arrière par rapport au passage de séparation (52), et également lorsque le levier culbuteur (61) est dans une position neutre, la paire d'organes obturateurs (55, 56) activée par les ressorts (57, 57) se déplaçant simultanément vers l'avant par rapport au passage de séparation (52).

3. Appareil d'envoi, de séparation et d'alimentation de vis mâles de type à tête selon la revendication 2, dans lequel les broches (63, 63) font saillie au niveau de côtés de la paire d'organes obturateurs (55, 56), et les trous oblongs (60, 60) qui s'engagent avec les broches (63, 63) sont disposés à des extrémités respectives du levier culbuteur (61).
